# EUROPÄISCHE PATENTSCHRIFT

(11) **EP 1 806 508 B1**
(45) Veröffentlichungstag und Bekanntmachung des Hinweises auf die Patenterteilung: **02.12.2009**
(21) Anmeldenummer: 07000303.3
(22) Anmeldetag: 09.01.2007
(51) Int. Cl.: F16B 35/06

(54) **Senkkopfschraube**
Countersunk head srew
Vis à tête fraisée

(30) Priorität: 10.01.2006 DE 102006002559
(43) Veröffentlichungstag der Anmeldung: 11.07.2007
(73) Patentinhaber: SWG Schraubenwerk Gaisbach GmbH, 74638 Waldenburg (DE)
(72) Erfinder: Heim, Markus, 74632 Neuenstein (DE)
(74) Vertreter: Patentanwälte Ruff, Wilhelm, Beier, Dauster & Partner

(56) Entgegenhaltungen:
- WO-A-96/22472
- DE-A1- 19 506 081
- US-A- 3 903 784
- US-A1- 2005 226 701

## Beschreibung

Die Erfindung betrifft eine Senkkopfschraube.

Senkkopfschrauben haben einen Schraubenkopf, dessen Stirnseite flach, also beispielsweise eben oder leicht gewölbt verläuft. Unterhalb der Stirnseite verringert sich der Durchmesser des Schraubenkopfs kontinuierlich bis auf den Durchmesser des Schraubenschafts. Beispielsweise kann die Unterseite des Schraubenkopfs die Form eines Kegelstumpfes aufweisen. Es sind aber auch Formen möglich, bei denen die Kontur gekrümmt verläuft, also nicht geradlinig wie bei einem Kegelstumpf. Gegebenenfalls kann zwischen der Stirnseite und dem Beginn des Kegelstumpfes noch eine flache zylindrische Form vorhanden sein, um eine scharfe Kante am Rand zu verhindern.

Senkkopfschrauben werden so verwendet, dass sie so eingeschraubt werden, dass die Stirnseite bündig mit der Oberseite beispielsweise einer Holzplatte verläuft.

Ein bekanntes Befestigungselement (DE 19506081) weist einen flachzylindrischen Kopf mit einem unterhalb des Kopfs ausgebildeten kegelstumpfförmigen Fortsatz auf, der in den Schraubenschaft übergeht. Der Rand der Unterseite des Kopfs bildet eine Schneidkante. Die Unterseite des Kopfs enthält zwischen dem Schaft und der Schneidkante eine Vertiefung zur Aufnahme von beim Einschneiden entstehenden Spänen. Dieser Schraubenkopf ist schwer herzustellen.

Weiterhin bekannt ist ein Befestigungselement mit einem flachen Schraubenkopf, dessen Außenseite gebogen verläuft. Ein zylindrischer Abschnitt unterhalb des Schraubenkopfs enthält Fräsrippen, die in Vertiefungen in der Unterseite des Schraubenkopfs übergehen (US 2982166).

Weiterhin ist eine Senkkopfschraube bekannt (US 3903784), bei der der Schraubenkopf an seiner Stirnseite eine flache Platte aufweist, die an ihrer Unterseite eine Kante bildet.

Der Erfindung liegt die Aufgabe zu Grunde, eine Senkkopfschraube zu schaffen, die bei einfachem Aufbau ein schnelles Einschrauben ermöglicht und bei der nach dem Einschrauben eine saubere Oberfläche gegeben ist.

Zur Lösung dieser Aufgabe schlägt die Erfindung eine Senkkopfschraube mit den im Anspruch 1 genannten Merkmalen vor. Weiterbildungen der Erfindung sind Gegenstand von Unteransprüchen.

Beim Einschrauben eines Senkkopfs erfolgt eine Verdrängung der Holzfaser. Durch die von der Erfindung vorgeschlagene Stanzeinrichtung werden nun die Holzfasern rings um den Rand des Schraubenkopfs zerschnitten zur Bildung eines Lochs, das dem Durchmesser des Schraubenkopfs entspricht. Dadurch ergibt sich eine saubere glatte Oberfläche, ohne dass sich um den Schraubenkopf herum Aufwölbungen ergeben.

Damit die durch die Stanzeinrichtung erzeugte Vertiefung die richtige Größe erhalten kann, kann erfindungsgemäß in Weiterbildung vorgesehen sein, dass die Stanzeinrichtung auf der dem vorderen Schraubenende abgewandten Seite des kegelstumpfartig ausgebildeten Senkabschnitts des Schraubenkopfes angeordnet ist.

Der Senkabschnitt des Schraubenkopfs weist eine Basis auf, die den maximalen Durchmesser des Senkabschnitts bildet. Die Erfindung schlägt nun vor, die Stanzeinrichtung so anzuordnen, dass sie von der Basis des Senkabschnitts noch einen axialen Abstand aufweist.

Insbesondere kann in Weiterbildung vorgesehen sein, dass die Stanzeinrichtung von einem scharfkantigen Rand einer Schulterfläche gebildet wird, deren Durchmesser mindestens so groß wie der Durchmesser der Basis des Senkabschnitts ist. Diese Schulterfläche kann insbesondere senkrecht zur Längsachse der Schraube verlaufen und eben ausgebildet sein.

In Weiterbildung der Erfindung kann vorgesehen sein, dass die Schulterfläche an der Unterseite eines flachen Abschnitts des Senkkopfs der Schraube ausgebildet ist, der beispielsweise als flache Scheibe geformt ist.

Insbesondere kann vorgesehen sein, dass der Durchmesser der Schulterfläche, deren Rand die Stanzeinrichtung bildet, größer ist als der Durchmesser der Basis des Senkabschnitts.

In nochmaliger Weiterbildung kann zur Verbesserung des Ergebnisses vorgesehen sein, dass an der Mantelfläche des Senkabschnitts eine Fräseinrichtung angeordnet ist, die beispielsweise mehrere gegebenenfalls scharfkantige Fräsrippen aufweist. Auf diese Weise wird beim Einschrauben der Schraube das Holz an der Stelle, wo der Senkkopf angeordnet werden soll, zunächst weg gefräst, bis gegen Ende des Einschraubvorgangs die noch vorhandenen Faserenden mit Hilfe der Stanzeinrichtung abgeschnitten werden.

Insbesondere kann in Weiterbildung vorgesehen sein, dass die Fräsrippen in radialer Richtung nicht über die Basis des Senkabschnitts vorspringen.

Die Richtung der Fräsrippen an der Unterseite des Schraubenkopfs kann beliebig gestaltet werden. Besonders sinnvoll ist es jedoch, wenn die Fräsrippen eine Erzeugende der Mantelfläche des Senkabschnitts entlang verlaufend angeordnet sind.

Es ist ebenfalls möglich, dass die Fräseinrichtung mindestens eine, vorzugsweise mehrere Frästaschen aufweist. An diesen Stellen sind Rücksprünge gegenüber der Mantelfläche des Senkabschnitts vorhanden. An den Enden der Frästaschen sind dann wiederum scharfe Kanten gebildet. Frästaschen können dazu dienen, abgefrästes Material aufzunehmen.

Es ist ebenfalls möglich, dass die Fräseinrichtung sowohl Fräsrippen als auch Frästaschen aufweist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine teilweise abgebrochene Darstellung einer Schraube nach der Erfindung;

- Figur 2: in vergrößertem Maßstab eine Seitenansicht des Schraubenkopfs der Schraube nach Figur 1;
- Figur 3: eine der Figur 2 entsprechende Darstellung eines Schraubenkopfs bei einer geänderten Ausführungsform;
- Figur 4: eine den Figuren 2 und 3 entsprechende Darstellung eines weiteren Schraubenkopfs.
- Figur 5: einen Schnitt durch das Schraubenkopfende einer Schraube nach einer weiteren Ausführungsform der Erfindung.

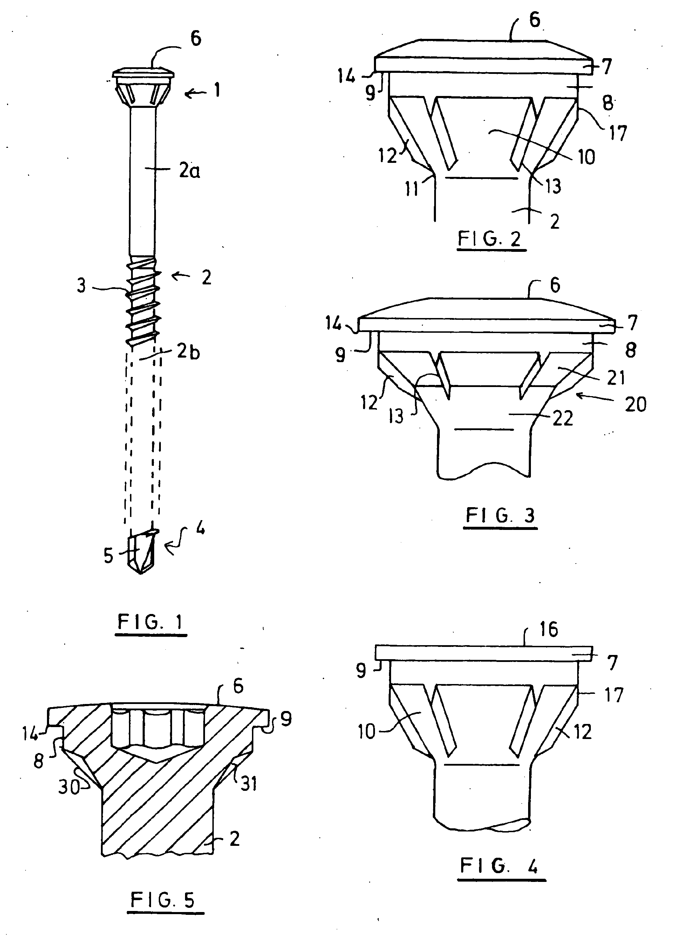

Figur 1 zeigt in einer Seitenansicht eine Senkkopfschraube nach der Erfindung. Die Schraube enthält einen Schraubenkopf 1 in Form eines Senkkopfs, einen Schraubenschaft 2 mit einem unterhalb des Schraubenkopfs 1 beginnenden gewindefreien glatten Abschnitt 2 a und einem sich daran anschließenden mit einem Gewinde versehenen Abschnitt 2b. Auf den Abschnitt 2 b ist ein Gewinde 3 aufgewalzt. An dem dem Schraubenkopf 1 abgewandten vorderen Ende 4 der Schraube ist eine Schneidspitze 5 ausgebildet, die in durch Kaltverformen des Schraubenschafts hergestellt ist. Der Schraubenkopf 1 weist eine leicht gewölbte Stirnseite 6 auf.

Einzelheiten des Schraubenkopfs 1 in der Schraube nach Figur 1 werden nun unter Bezugnahme auf Figur 2 beschrieben. Der Schraubenkopf hat eine leicht gekrümmte Stirnseite, die auch als Linsenkopf bezeichnet werden kann. An die linsenförmige Stirnseite 6 schließt sich ein scheibenartiger Kopfabschnitt 7 an, dessen Rand in einer Zylinderoberfläche liegt. An den scheibenartigen Kopfabschnitt 7 schließt sich ein im Durchmesser verringerter ebenfalls zylinderförmiger Abschnitt 8 an. Dadurch ist an der Unterseite des Kopfabschnitts 7 eine Schulterfläche 9 gebildet, die in einer Ebene senkrecht zur Längsachse der Schraube angeordnet ist. Der Durchmesser des Abschnitts 8 bildet den Basisdurchmesser des sich daran anschließenden Senkabschnitts 10 an, der im dargestellten Beispiel kegelstumpfförmig ausgebildet ist. Der kegelstumpfförmige Senkabschnitt 10 geht dann über eine leichte Verrundung 11 in den Schraubenschaft 2 über.

An der Mantelfläche des Senkabschnitts 10 sind insgesamt sechs Fräsrippen 12 ausgebildet, die im Querschnitt dreieckig sind und dadurch einer scharfe Fräskante 13 bilden. Die Fräsrippen verlaufen längs einer Erzeugenden des Senkabschnitts 10.

An dem Übergang zwischen der Mantelfläche des scheibenartigen Kopfabschnitts 7 und der als Schulterfläche 9 ausgebildeten Unterseite dieses scheibenartigen Kopfabschnitts 7 ist eine Kante 14 gebildet. Diese Kante ist scharfkantig ausgeformt. Beim Einschrauben in Holz führt diese scharfe Kante 14 einen Schneidvorgang durch, der die Holzfasern sauber zerschneidet und auf diese Weise eine Vertiefung mit glatten Rändern bildet.

Vorher werden die Holzfasern mit Hilfe der Fräsrippen 12 weg gefräst, so dass der Senkabschnitt sich Platz unterhalb der Oberfläche des Holzes bildet.

Bei der Ausführungsform nach Figur 2 weist der Senkabschnitt 10 die Form eines Kegelstumpfes auf. Die Erzeugende ist also eine gerade Linie. Selbstverständlich sind auch andere Formen des Senkabschnitts möglich, beispielsweise eine geschwungene Kontur.

Bei der Ausführungsform nach Figur 3 weist der Senkabschnitt 20 die Form zweier sich axial anschließender Kegelstümpfe auf. Der erste Kegelstumpf 21 weist einen größeren Kegelwinkel auf als der sich daran anschließende Kegelstumpf 22. Die Fräsrippen 12 sind an dem ersten näher an der Stirnfläche 6 angeordneten Kegelstumpfabschnitt 21 angeordnet und ausgebildet und reichen bis gerade in den Beginn des zweiten sich daran anschließenden kegelstumpfförmigen Abschnitts 22 heran.

Im übrigen ist der Schraubenkopf der Figur 3 genauso aufgebaut wie der Schraubenkopf der Figur 2, so dass sich auch die gleichen Wirkungen ergeben.

Während bei den Schraubenköpfen der Figur 2 und 3 die Stirnseite 6 leicht gebogen verläuft, zeigt die Figur 4 einen Schraubenkopf mit einer ebenen Stirnseite 16, so dass der scheibenförmige Abschnitt 7 auf beiden Seiten von einer ebenen Fläche begrenzt ist. Der Senkabschnitt des Schraubenkopfs der Figur 4 entspricht im übrigen dem Senkabschnitt 10 des Schraubenkopfs der Figur 2.

Selbstverständlich lassen sich die Senkabschnitte der Schraubenköpfe aller Figuren mit den Formen der Stirnseite 6, 16 aller Schraubenköpfe miteinander kombinieren.

Die in radialer Richtung äußere Begrenzung 17 der Fräsrippen 12 liegt in einer Kreiszylinderfläche, in der auch die Mantelfläche des zylindrischen Abschnitts 8 angeordnet ist.

Die Figur 5 zeigt einen Axialschnitt durch einen Schraubenkopf nach einer weiteren Ausführungsform. Die Mantelfläche 30 des Kegelstumpfabschnitts, der den Übergang zwischen dem zylinderförmigen Abschnitt 8 und dem Schraubenschaft 2 bildet, weist Vertiefungen 31 auf, die Frästaschen bilden. An den in Umfangsrichtung gesehenen Enden dieser Frästaschen 31, wo die Außenkontur wieder in die Mantelfläche 30 übergeht, können scharfe Kanten gebildet sein, die dann ähnlich wie die Fräsrippen 12 einen Fräsvorgang durchführen können. Das dabei abgefräste Material kann in den Frästaschen 31 aufgenommen werden.

## Patentansprüche

1. Senkkopfschraube, mit
1.1 einem als Senkkopf (1) ausgebildeten Schraubenkopf,
1.2 einem sich daran anschließenden Schraubenschaft (2),
1.3 einem vorderen Schraubenende (4), und
1.4 einem sich über den Schraubenschaft (2) mindestens teilweise erstreckenden Schraubengewinde (3), sowie mit
1.5 einer Stanzeinrichtung an der Unterseite des Schraubenkopfs (1) **dadurch gekennzeichnet, daß**
1.6 die Stanzeinrichtung von der Basis des Senkabschnitts (10, 20) einen axialen Abstand aufweist.

2. Senkkopfschraube nach Anspruch 1, bei der die Stanzeinrichtung auf der dem vorderen Schraubenende (4) abgewandten Seite des kegelstumpfartigen Senkabschnitts (10) angeordnet ist.

3. Senkkopfschraube nach Anspruch 1 oder 2, bei der der Abschnitt zwischen der Stanzeinrichtung und der Basis des Senkabschnitts (10, 20) mindestens angenähert zylindrisch ausgebildet ist.

4. Senkkopfschraube nach einem der vorhergehenden Ansprüche, bei der die Stanzeinrichtung von einem scharfkantigen Rand (14) einer Schulterfläche (9) gebildet wird, deren Durchmesser mindestens so groß wie der Durchmesser der Basis des Senkabschnitts (10, 20) ist.

5. Senkkopfschraube nach Anspruch 4, bei der die Schulterfläche (9) eine ebene senkrecht zur Längsachse der Schraube verlaufende nicht hinterschnittene Fläche ist.

6. Senkkopfschraube nach Anspruch 5, bei der die Schulterfläche (9) an der Unterseite eines flachen, vorzugsweise zylindrischen Kopfabschnitts (7) ausgebildet ist.

7. Senkkopfschraube nach einem der Ansprüche 4 bis 6, bei der der Durchmesser der Schulterfläche (9) größer ist als der Durchmesser der Basis des Senkabschnitts (10, 20).

8. Senkkopfschraube nach einem der vorhergehenden Ansprüche, bei der an der Mantelfläche des Senkabschnitts (10, 20) eine Fräseinrichtung angeordnet ist.

9. Senkkopfschraube nach Anspruch 8, bei der die Fräseinrichtung mindestens eine, vorzugsweise mehrere gegebenenfalls scharfkantige Fräsrippen (12) aufweist.

10. Senkkopfschraube nach Anspruch 9, bei der die Fräsrippen (12) in radialer Richtung nicht über die Basis des Senkabschnitts (10, 20) vorspringen.

11. Senkkopfschraube nach Anspruch 9 oder 10, bei der die Fräsrippen (12) eine Erzeugende der Mantelfläche des Senkabschnitts (10) entlang verlaufend angeordnet sind.

12. Senkkopfschraube nach einem der Ansprüche 8 bis 11, bei der die Fräseinrichtung mindestens eine Frästasche (31) aufweist.

## Claims

1. A countersunk screw with
a screw head formed as countersunk head (1),
an adjoining screw shank (2) thereon,
a front screw end (4), and
a screw thread (3) at least partly extending over the screw shank (2), as well as
a punching device on the underside of the countersunk head (1) **characterised in that**
the punching device features an axially extending distance from the base of the countersunk section (10, 20).

2. The countersunk screw according to Claim 1, in which the punching device is disposed on the side of the truncated-conical shaped countersunk section (10) facing away from the front screw end (4).

3. The countersunk screw according to Claim 1 or 2, in which the section between the punching device and the base of the countersunk section (10, 20) is formed at least in approximately cylindrical shape.

4. The countersunk screw according to one of the preceding claims, in which the punching device is formed by a sharpened edge (14) of a shoulder surface (9), of which the diameter is at least as large as the diameter of the base of the countersunk section (10, 20).

5. The countersunk screw according to Claim 4, in which the shoulder surface (9) is a plane surface not undercut and running perpendicular to the longitudinal axis of the screw.

6. The countersunk screw according to Claim 5, in which the shoulder surface (9) is formed on the underside of a shallow, preferably cylindrical head section (7).

7. The countersunk screw according to on of Claims 4 to 6, in which the diameter of the shoulder surface (9) is greater than the diameter of the base of the countersunk section (10, 20).

8. The countersunk screw according to one of the preceding claims, in which a milling device is disposed on the circumferential surface of the countersunk section (10, 20).

9. The countersunk screw according to Claim 8, in which the milling device features at least one, preferably several possibly sharp-edged milling ribs (12).

10. The countersunk screw according to Claim 9, in which the milling ribs (12) in radial direction do not protrude above the base of the countersunk section (10, 20).

11. The countersunk screw according to Claim 9 or 10, in which the milling ribs (12) are disposed along a generatrix of the circumferential surface of the countersunk section (10).

12. The countersunk screw according to one of Claims 8 to 11, in which the milling device features at least a milling pocket (31).

## Revendications

1. Vis à tête fraisée, comprenant
une tête de vis configurée en tête fraisée (1),
une tige (2) de vis se raccordant à la tête,
une extrémité avant (4) de vis et
un filetage (3) de vis s'étendant au moins en partie sur la tige (2) de vis, ainsi que comprenant
un dispositif de perforation sur le côté inférieur de la tête (1) de vis,
**caractérisé en ce que**
le dispositif de perforation présente un écart axial par rapport à la base du segment fraisé (10, 20).

2. Vis à tête fraisée selon la revendication 1, sur laquelle le dispositif de perforation se trouve sur le côté du segment fraisé (10) tronqué opposé à l'extrémité avant (4) de la vis.

3. Vis à tête fraisée selon la revendication 1 ou 2, sur laquelle le segment situé entre le dispositif de perforation et la base du segment fraisé (10, 20) présente une géométrie au moins approximativement cylindrique.

4. Vis à tête fraisée selon l'une des revendications précédentes, sur laquelle le dispositif de perforation est formé par l'arête vive (14) d'une surface d'épaulement (9) dont le diamètre est au minimum égal au diamètre de la base du segment fraisé (10, 20).

5. Vis à tête fraisée selon la revendication 4, sur laquelle la surface d'épaulement (9) est une surface plane non contre-dépouillée présentant un tracé vertical par rapport à l'axe longitudinal de la vis.

6. Vis à tête fraisée selon la revendication 5, sur laquelle la surface d'épaulement (9) a été formée contre la face inférieure d'un segment (7) plat, de préférence cylindrique, de la tête.

7. Vis à tête fraisée selon l'une des revendications 4 à 6, sur laquelle le diamètre de la surface d'épaulement (9) est supérieur au diamètre de la base du segment fraisé (10, 20).

8. Vis à tête fraisée selon l'une des revendications précédentes, sur laquelle un dispositif de fraisage est agencé sur la surface enveloppante du segment fraisé (10, 20).

9. Vis à tête fraisée selon la revendication 8, sur laquelle le dispositif de fraisage comporte au moins une, de préférence plusieurs, nervures de fraisage (12) présentant le cas échéant des arêtes vives.

10. Vis à tête fraisée selon la revendication 9, sur laquelle les nervures de fraisage (12) observées en direction radiale ne font pas saillie au dessus de la base du segment fraisé (10, 20).

11. Vis à tête fraisée selon la revendication 9 ou 10, sur laquelle les nervures de fraisage (12) sont agencées longeant une génératrice de la surface enveloppante du segment fraisé (10).

12. Vis à tête fraisée selon l'une des revendications 8 à 11, sur laquelle le dispositif de fraisage présente au moins une poche (31) de fraisage.
